# EUROPEAN PATENT SPECIFICATION

(11) **EP 2 133 396 B1**
(45) Date of publication and mention of the grant of the patent: **25.01.2012**
(21) Application number: 08738449.1
(22) Date of filing: 31.03.2008
(51) Int. Cl.: C09J 7/02, C09J 11/06, C09J 123/22, C09J 153/02

(54) **COATING PROTECTIVE SHEET**
VERFAHREN ZUR BESCHICHTUNG EINER SCHUTZFOLIE
FEUILLE PROTECTRICE DE REVÊTEMENT

(30) Priority: 03.04.2007 JP 2007097366
(43) Date of publication of application: 16.12.2009
(73) Proprietor: Nitto Denko Corporation, Ibaraki-shi Osaka 567-8680 (JP)
(72) Inventor: SHIRAI, Mitsuyoshi, Ibaraki-shi Osaka 567-8680 (JP); UESUGI, Masanori, Ibaraki-shi Osaka 567-8680 (JP); KONDOU, Takashi, Ibaraki-shi Osaka 567-8680 (JP); OKAMOTO, Masayuki, Ibaraki-shi Osaka 567-8680 (JP); NIWA, Masahito, Ibaraki-shi Osaka 567-8680 (JP)
(74) Representative: Grünecker, Kinkeldey, Stockmair & Schwanhäusser
(86) International application number: PCT/JP2008/000816
(87) International publication number: WO 2008/129852

(56) References cited:
- EP-A2- 0 519 278
- EP-A2- 1 130 069
- JP-A- 06 073 352
- JP-A- 63 165 475
- JP-A- 2004 315 823
- US-A- 5 643 676

## Description

### Technical Field

The present invention relates to a sheet for protecting coatings. Specifically, it relates to a sheet for protecting coatings showing preferable adhesiveness even to coatings often causing low adhesive and retaining its preferable releasability even after being bonded for a long period of time, which is preferable for surface protection of automobile bodies and the parts thereof, coated steel plates and the like.

### Background Art

There exists a need for means of protecting coated automobiles and the parts thereof from surface damage by floating and colliding matters such as dust, rain and gravel, deterioration in glossiness, discoloration, and the like during their transportation on track or ship to remote sites for example in foreign countries.

A waxing method of coating a wax-based material to a thickness of 5 to 20 µm has been used as the means for protecting coatings for example on automobiles. However, the method had various problems that it was difficult to form the wax layer uniformly by the method, the wax layer is not resistant to staining in wax layer formation and acid rain by failure, it demands extensive labor for coating and removal after use of the wax layer, and there are environmental concerns about use of solvent and wastewater treatment during wax removal.

A surface-protecting sheet of using a supporting substrate carrying a pressure-sensitive adhesive layer formed thereon has been employed increasingly, replacing the waxing method, as a means of overcoming these problems, and, for example, a surface-protecting pressure-sensitive adhesive film carrying a radiation-curing pressure-sensitive adhesive layer having a low glass transition temperature is known (see Patent Document 1). In addition, sheets for protecting automobile coatings carrying a pressure-sensitive adhesive layer containing a rubber-based polymer such as polyisobutylene or a rubber-based polymer blended with an acrylic polymer having a low glass transition temperature are also known (see Patent Document 2).

However, even such sheets for protecting coatings were sometimes insufficient in adhesive strength to some kinds of coatings when used and showed deterioration in adhesive strength over time, causing problems of exfoliation, and thus had problems such as of poor flexibility in use and poor practical performance.

Patent Document 1: JP-A No. 2-199184
Patent Document 2: JP-A No. 6-73352

### Disclosure of Invention

### Problems to be Solved by the Invention

The inventors have found that the low adhesive of the sheets for protecting coatings was caused by bleeding on the coating surface of the unreacted low-molecular weight components of the coating resin in the coating for example of automobiles and of the leveling agents added thereto for prevention of paint repelling during coating. Specifically, such bleeding is considered to form a weekly cohesive layer on the coating surface, which inhibits adhesion. Cleaning of the surface of the bleeding layer demands great labor, eliminating the technological advantage over the waxing method. Alternatively, increase in adhesive power of the sheet for protecting coatings, which leads to deterioration in releasability during separation of the sheet for protecting coatings, is not considered to be effective means.

Therefore, an object of the present invention is to provide a sheet for protecting coatings that shows superior adhesiveness even to coating layers often causing low adhesive by bleeding for example of leveling agents and the like (hereinafter, referred to as "hardly adhesive coating") without a washing treatment and the like, retains its preferable adhesion state for a long time, and is easily releasable when it is separated even after being bonded for an extended period of time.

### Means to Solve the Problems

After intensive studies to achieve the object, the inventors have found that it was possible to overcome the problems above by using an adhesive containing a rubber-based polymer and an acrylic polymer blended thereto having a relatively high glass transition temperature in a particular range, and made the present invention.

Specifically, the present invention provides a sheet for protecting coatings, which includes a pressure-sensitive adhesive sheet including a supporting substrate and a pressure-sensitive adhesive layer formed at least on one side thereof, containing a rubber-based polymer and an aliphatic (meth)acrylic oligomer having a glass transition temperature of 30 to 100°C and a weight-average molecular weight of 1000 to 20,000, wherein the blending amount of the (meth)acrylic oligomer is 0.02 to 1 wt part with respect to 100 wt parts of the rubber-based polymer.

In addition, the present invention provides the sheet for protecting coatings above, wherein the rubber-based polymer is polyisobutylene or a styrene-based A-B-A-type block polymer.

In addition, the present invention provides the sheet for protecting coatings above, wherein the (meth)acrylic oligomer is a cycloalkyl (meth)acrylate oligomer.

In addition, the present invention provides the sheet for protecting coatings above, wherein the cycloalkyl(meth)acrylic oligomer is a cyclohexyl methacrylate oligomer.

In addition, the present invention provides the sheet for protecting coatings above, for protection of automobile coatings.

### Effects of the Invention

The sheet for protecting coatings according to the present invention, which is in such a configuration described above, shows preferable adhesive strength even to hardly adhesive coatings. It also retains its preferable adhesion state for an extended period of time. In addition, the sheet can be separated easily even after being bonded for an extended period of time, and there is no adhesive residue of contaminant substances remaining on the coating surface. Thus, the sheet for protecting coatings according to the present invention demands no cleaning of the coating during use and is thus superior practically in cost and environment friendliness.

### Best Mode for Carrying Out the Invention

The sheet for protecting coatings according to the present invention has a at least two-layered structure having a supporting substrate and a pressure-sensitive adhesive layer according to the present invention formed at least on one side thereof. The sheet for protecting coatings according to the present invention may have, in addition to the supporting substrate and the pressure-sensitive adhesive layer according to the present invention, other layers such as easily adhesive layer, rubbery elastic organic layer, ultraviolet-absorbing layer, printing layer, and pressure-sensitive adhesive layers other than the pressure-sensitive adhesive layer according to the present invention. In addition, a separator (release film) may be laminated temporarily to the pressure-sensitive adhesive layer surface before use of the sheet, for prevention of deposition of foreign matters onto the pressure-sensitive adhesive layer and adhesion between the pressure-sensitive adhesive layer surface and the rear face of the sheet in the roll shape.

The supporting substrate for use as the sheet for protecting coatings according to the present invention is a sheet responsible for the strength property and the handling efficiency of the sheet. As for the supporting substrates, various sheet-shaped products including plastic films, air-permeable porous films, paper, cloths, nonwoven fabrics, metal foils or the plastic laminates thereof, laminated plastic films and the like can be used. In particular, plastic films and sheets are most preferable from the viewpoints of handling efficiency and cost. The raw materials for the plastic film can be selected arbitrarily from the viewpoints of strength, heat resistance and others, and examples thereof include α-olefin monomer-based olefinic resins such as polyethylene (PE), polypropylene (PP), ethylene-propylene copolymers, and ethylene-vinyl acetate copolymers (EVA); polyesters such as polyethylene terephthalate (PET), polyethylene naphthalate (PEN) and pclybutylene terephthalate (PBT); polyvinyl chlorides (PVC); polyphenylene sulfides (PPS); amide resins such as polyamides (nylon) and wholly aromatic polyamides (aramides); polyether ether ketone (PEEK), polyimides, polyether imides, polystyrenes, acrylic resins and the like. These raw materials may be used alone or in combination of two or more. The plastic film for use may be an unstretched film, a uniaxially oriented film or a biaxially oriented film. These films may be laminated films having 2 or more layers. The thickness of the supporting substrate varies according to application and is not particularly limited, but, for example, it is preferably 5 to 300 µm, and more preferably 10 to 100 µm.

The pressure-sensitive adhesive layer for use in the sheet for protecting coatings according to the present invention contains an adhesive comprising a rubber-based polymer as the base polymer and additionally a (meth)acrylic oligomer as the essential component. The adhesive may contain, as needed, various blending components (additives) additionally. The term "(meth)acrylic" in the present invention means "acrylic and/or methacrylic", and other relevant terms have similar meanings.

Examples of the rubber-based polymers for use in the pressure-sensitive adhesive layer according to the present invention include natural rubbers and various synthetic rubbers [e.g., polyisobutylene and butyl rubbers, polyisoprene rubbers, styrene-butadiene (SB) rubbers, styrene-isoprene (SI) rubbers, styrene-isoprene-styrene block copolymer (SIS) rubbers, styrene-butadicne-styrene block copolymer (SBS) rubbers, styrene-ethylene-butylene-styrene block copolymer (SEBS) rubbers, styrene-ethylene-propylene-styrene block copolymer (SEPS) rubbers, styrene-ethylene-propylene block copolymer (SEP) rubbers, reclaimed rubbers, the modified derivatives thereof, and the like]. Among them, styrene-based A-B-A-type block copolymers such as polyisobutylene or polystyrene block-ethylene-butylene copolymer block-polystyrene block copolymers (SEBS) and polystyrene block-ethylene propylene copolymer block-polystyrene block copolymers (SEPS) are preferable from the viewpoint of releasability. These rubber-based polymers may be used alone or in combination of two or more, and polymers in the same grade but different in molecular weight can also be used in combination.

Among the resins above, the adhesive in combination with polyisobutylene is preferably an adhesive including a high-molecular-weight polyisobutylene having a weight-average molecular weight of 100,000 or more (for example, 100,000 to 1000,000, more preferably 300,000 to 900,000) and a low-molecular-weight polyisobutylene having a weight-average molecular weight of less than 100,000 (for example, 10,000 or more and less than 100,000, more preferably 20,000 to 80,000), from the viewpoints of adhesiveness and releasability. The blending ratio (by weight) of the high-molecular weight polyisobutylene to the low-molecular weight polyisobutylene is preferably 95: 5 to 50: 50, and more preferably 80: 20 to 60: 40.

The copolymerization ratio of the polystyrene blocks to the flexible blocks in the styrene-based A-B-A-type block polymer is preferably 10: 90 to 95: 5, and more preferably 15: 85 to 75: 25.

The rubber-based polymer according to the present invention is the base polymer for the adhesive, and the content thereof in the entire adhesive (pressure-sensitive adhesive layer) is preferably 50 wt % or more, and more preferably 65 wt % or more.

The (meth)acrylic oligomer for use in the pressure-sensitive adhesive layer according to the present invention is not particularly limited, if it is an aliphatic (including alicyclic) (meth)acrylic oligomer having a glass transition temperature of 30 to 100°C, and specifically, it is a homopolymer or copolymer containing an alkyl (meth)acrylate ester (including cycloalkyl ester) as the essential monomer component. Examples of the monomer components include straight- or branched-chain alkyl group-containing alkyl (meth)acrylate esters such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isoamyl (meth)acrylate, neopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate and dodecyl (meth)acrylate; and alicyclic alkyl group-containing cycloalkyl (meth)acrylate esters such as cyclopentyl (meth)acrylate, cyclohexyl (meth)acrylate, isobornyl (meth)acrylate.

The (meth)acrylic oligomer according to the present invention may contain copolymerization components other than those above. Examples of the copolymerization components include carboxyl group-containing monomers such as (meth)acrylic acid, carboxyethyl (meth)acrylate, carboxypentyl (meth)acrylate, itaconic acid, maleic acid, fumaric acid, and crotonic acid; acid anhydride monomers such as maleic anhydride and itaconic anhydride; hydroxyl group-containing monomers such as 2-hydroxyethyl (meth)acrylate and 2-hydroxypropyl (meth)acrylate; sulfonic acid group-containing monomers such as styrenesulfonic acid and allylsulfonic acid; and phosphoric acid group-containing monomers such as 2-hydroxyethylacryloyl phosphate.

In particular, the (meth)acrylic oligomer according to the present invention is preferably a cycloalkyl (meth)acrylate oligomer. It is particularly preferably an oligomer having cyclohexyl methacrylate as the main monomer component, and most preferably a cyclohexyl methacrylate oligomer, from the viewpoint of glass transition temperature. The main monomer component is contained in an amount of 50 to 100 wt %, preferably 90 to 100 wt %, with respect to the total amount of the monomer components constituting the (meth)acrylic oligomer.

The method of polymerizing the (meth)acrylic oligomer according to the present invention is not particularly limited, and generally, a solution polymerization method or an ultraviolet (UV) polymerization method is used preferably.

The glass transition temperature (Tg) of the (meth)acrylic oligomer according to the present invention is 30 to 100°C, preferably 40 to 90°C, and more preferably 50 to 80°C. When the glass transition temperature is lower than 30°C, the (meth)acrylic oligomer becomes liquid at room temperature, prohibiting improvement in adhesiveness, while, when it is higher than 100°C, the adhesive becomes harder, prohibiting improvement in adhesive strength.

The glass transition temperature (Tg) is the peak temperature of loss modulus, as determined by dynamic torsional viscoelasticity measurement at a frequency of 1 Hz. It is determined, for example by using "ARES Rheometer" manufactured by TA Instruments Japan Inc., under the following conditions: geometry type: parallel plate, diameter: 7.9 mm, frequency: 1 Hz, programmed heating rate: 5.0°C /minute, deformation: 0.1%, and sample thickness: approximately 1.3 mm, although the measurement method is not particularly limited thereto.

The weight-average molecular weight of the (meth)acrylic oligomer according to the present invention is 1000 to 20,000, and preferably 2000 to 10,000. An oligomer having a molecular weight of more than 20,000 may be not move easily in the pressure-sensitive adhesive layer, making it difficult to form the dispersion state localized on the pressure-sensitive adhesive layer surface, as described below. Alternatively, an oligomer having a molecular weight of less than 1000 has lower adhesive strength because of decrease of the cohesive force of the oligomer localized on a surface of the adhesive.

The blending amount of the (meth)acrylic oligomer according to the present invention is 0.02 to 1 wt part, preferably 0.1 to 1 wt part, and more preferably 0.2 to 0.8 wt part, with respect to 100 wt parts of the rubber-based polymer according to the present invention. The advantageous effect (adhesiveness) obtained by adding the (meth)acrylic oligomeric is insufficient when the blending amount is less than 0.02 wt part, while a blending amount of more than 1 wt part is likely to lead to excessive increase in adhesive strength, deterioration in releasability, and residual of the adhesive (residual of contaminants) on the desired coating after sheet separation.

The adhesive according to the present invention may contain, as needed, for example, polymers other than the rubber-based polymer and the (meth)acrylic oligomer according to the present invention and known blending components (additives) such as tackifiers, colorants such as pigments, crosslinking agents, crossbinding agents, tackifier resins, fillers, flame retardants, aging inhibitors, antistatic agents, softeners, ultraviolet absorbents, antioxidants, plasticizers, surfactants, and the like. These blending components can be used properly in the ranges that do not impair the advantageous effects of the present invention, for example in adhesive property, and added in an amount of about 0.05 to 50 wt % with respect to the adhesive.

Examples of the polymers above include poly(meth)acrylic esters other than the (meth)acrylic oligomer according to the present invention, polystyrene, α-olefinic resins, polyesters, polyurethanes, polyacrylonitriles, polyamides and the like.

Examples of the tackifiers include epoxy resins, coumarone indene resins, rosin resins, terpene resins, petroleum resins, oil-soluble phenol resins and the like. Among the resins above, rosin resins and terpene resins are preferable for the polyisobutylene-containing adhesives. The blending amount is preferably 15 to 40 wt parts with respect to 100 wt parts of the rubber-based polymer.

Examples of the softeners include process oils, petroleum softeners and the like. Preferable examples of the fillers and pigments include calcium oxide, magnesium oxide, silica, zinc oxide, titanium oxide and the like.

The thickness of the pressure-sensitive adhesive layer according to the present invention is not particularly limited, but generally, preferably 100 µm or less, more preferably 1 to 50 µm, and still more preferably 3 to 20 µm.

The method of forming the pressure-sensitive adhesive layer according to the present invention is not particularly limited, and the methods include, for example, a method of applying an adhesive solution prepared by using a solvent (toluene, hexane, cyclohexane, heptane, or the like) on a supporting substrate and drying and curing the resulting film as needed, a method of applying an adhesive on a separator (release liner) and drying and curing the film as needed for formation of a pressure-sensitive adhesive layer and then, laminating and transferring the pressure-sensitive adhesive layer onto a particular face, and the like. In applying the adhesive, any traditional coating machine (e.g., gravure roll coater, reverse roll coater, kiss roll coater, dip roll coater, bar coater, knife coater, spray coater, or the like) may be used.

In the present invention, combined use of a so-called rubber-based adhesive with a small amount of a (meth)acrylic oligomer having a glass transition temperature in a particular range can give a pressure-sensitive adhesive layer having an adhesive strength, even to hardly adhesive coatings, sufficient for preventing self-exfoliation for an extended period of time, that is easily releasable without any deposition of contaminants on the coating even after long-term adhesion. The mechanism of development of the operational advantages above is yet to be understood, but the following mechanism is likely. If a particular (meth)acrylic oligomer according to the present invention is blended in a rubber-based adhesive, the (meth)acrylic oligomer moves in the pressure-sensitive adhesive layer, forming a peculiar dispersion state in which the oligomer is localized close to the pressure-sensitive adhesive layer surface (at the coating/pressure-sensitive adhesive layer interface after bonding to the coating). It is because low-molecular weight components are localized on the surface because of entropy. As described above, low-molecular weight components and leveling agent components normally bleed out of the coating surface, and, if a pressure-sensitive adhesive layer made only of a rubber-based polymer and a coating are laminated to each other, the bleeding component forms a weekly cohesive layer at the coating /pressure-sensitive adhesive layer interface, leading to decrease in adhesive power. However in the pressure-sensitive adhesive layer according to the present invention, because the (meth)acrylic oligomer is localized in the pressure-sensitive adhesive layer surface layer, the bleeding components are adsorbed (absorbed) in the pressure-sensitive adhesive layer by the inductive effect of the (meth)acrylic oligomer, making the formation of the bleeding component layer at the interface difficult and thus, making the pressure-sensitive adhesive layer highly adhesive even to hardly adhesive coating surface. It is likely that the low-molecular weight components and the leveling agent components contained in the coating, which are generally acrylic oligomers, interact with the (meth)acrylic oligomer according to the present invention when the compatibility thereto is improved, thus expressing the inductive effect.

The (meth)acrylic oligomer, which has a high glass transition temperature (Tg), absorbs the leveling agents present on the coating surface, forming a strong adhesive interface. The acrylic oligomer having a low Tg (lower than 30°C, especially 0°C or lower) does not show improved adhesive strength, even if it absorbs the leveling agent components on the coating surface, because the Tg of the (meth)acrylic oligomer is low and the adhesive interface layer is thus softened. For example as described in Patent Document 2 (JP-A No. 6-73352), an acrylic oligomer shows preferable effects in releasability, when it has a Tg of 0°C or lower, but prohibits improvement both in adhesive strength and releasability.

The sheet for protecting coatings according to the present invention is used preferably, for example, to coatings based on polyester-melamine resins, melamine-alkyd resins, acryl-melamine resins, epoxy group-containing acrylic-polyacid resins, urethane resins and others. In particular, it can be used preferably to hardly adhesive coatings that often result in low adhesive to conventional rubber-based adhesives because the coating layers contain unreacted low-molecular-weight components, leveling agents (e.g., acrylic oligomers, etc.) and others. In particular, epoxy group-containing acrylic-polyacid-based coating layers, which generally contain leveling agents in a greater amount, are often hardly adhesive. The hardly adhesive coating according to the present invention is not particularly limited, and, for example, a coating having an n-hexadecane contact angle of 15° to the coating face. The coating is formed, for example, on automobile bodies and the parts thereof, metal plates such as steel plates and the moldings thereof, and the like. Accordingly, the sheet for protecting coatings according to the present invention is used preferably, for example, for surface protection of the automobile bodies and the steel plates above from collision by small solid bodies and corrosion by chemicals. In particular, it is used particularly preferably, for example, for laminating at high temperature during outdoor transportation and others and for long-term bonding.

### EXAMPLES

Hereinafter, the present invention will be described in more detail with reference to Examples, but it should be understood that the present invention is not restricted by these Examples.

### Preparative Example 1 (Oligomers of Examples 1 to 6 and Comparative Example 2)

### Preparation of cyclohexyl methacrylate oligomer (glass transition temperature: 56°C, weight-average molecular weight: 4000)

300 wt parts of cyclohexyl methacrylate and 300 wt parts of toluene were placed in a 1-L flask, and the flask was nitrogen-substituted approximately for 1 hour. 0.6 wt part of azobisisobutylonitrile (AIBN) and 9 wt parts of thioglycol dissolved in a small amount of toluene were then added thereto. After polymerization at 70°C for 2 hours, the solution was aged at 80°C for 1 hour additionally, to give a cyclohexyl methacrylate oligomer having a weight-average molecular weight as polystyrene of 4000 (the same shall apply hereinafter), as determined by GPC (gel-permeation chromatography), and a glass transition temperature of 56°C.

### Preparative Example 2 (Oligomer of Comparative Example 3)

### Preparation of cyclohexyl methacrylate oligomer (glass transition temperature: 56°C, weight-average molecular weight: 800)

300 wt parts of cyclohexyl methacrylate and 300 wt parts of toluene were placed in a 1-L flask, and the flask was nitrogen-substituted approximately for 1 hour. 1.5 wt parts of AIBN and 18 wt parts of thioglycol dissolved in a small amount of toluene was then added thereto. After polymerization at 70°C for 2 hours, the solution was aged at 80°C for 1 hour additionally, to give a cyclohexyl methacrylate oligomer having a weight-average molecular weight as polystyrene of 800, as determined by GPC (gel-permeation chromatography), and a glass transition temperature of 56°C.

### Preparative Example 3 (Oligomer of Comparative Example 4)

### Preparation of cyclohexyl methacrylate oligomer (glass transition temperature: 56°C, weight-average molecular weight: 30,000)

300 wt parts of cyclohexyl methacrylate and 300 wt parts of toluene were placed in a 1-L flask, and the flask was nitrogen-substituted approximately for 1 hour. 0.6 wt part of AIBN and 3 wt parts of thioglycol dissolved in a small amount of toluene was then added thereto. After polymerization at 70°C for 2 hours, the solution was aged at 80°C for 1 hour additionally, to give a cyclohexyl methacrylate oligomer having a weight-average molecular weight as polystyrene of 30000, as determined by GPC (gel-permeation chromatography), and a glass transition temperature of 56°C.

### Preparative Example 4 (Oligomer of Comparative Example 5)

### Preparation of n-butyl acrylate oligomer (glass transition temperature: -54°C, weight-average molecular weight: 4000)

300 wt parts of n-butyl acrylate and 300 wt parts of toluene were placed in a 1-L flask, and the flask was nitrogen-substituted approximately for 1 hour. 0.45 wt part of AIBN and 12 wt parts of thioglycol dissolved in a small amount of toluene was then added thereto. After polymerization at 70°C for 2 hours, the solution was aged at 80°C for 1 hour additionally, to give a n-butyl acrylate oligomer having a weight-average molecular weight as polystyrene of 4000, as determined by GPC (gel-permeation chromatography), and a glass transition temperature of -54°C.

### Preparative Example 5 (Oligomer of Comparative Example 6)

### Preparation of phenyl methacrylate oligomer (glass transition temperature: 110°C, weight-average molecular weight: 4000)

300 wt parts of phenyl methacrylate and 300 wt parts of toluene were placed in a 1-L flask, and the flask was nitrogen-substituted approximately for 1 hour. 0.65 wt part of AIBN and 6 wt parts of thioglycol dissolved in a small amount of toluene was then added thereto. After polymerization at 70°C for 2 hours, the solution was aged at 80°C for 1 hour additionally, to give a phenyl methacrylate oligomer having a weight-average molecular weight as polystyrene of 4000, as determined by GPC (gel-permeation chromatography), and a glass transition temperature of 110°C.

### Example 1 (Preparation of sheet for protecting coatings)

0.02 wt part of the cyclohexyl methacrylate oligomer obtained in Preparative Example 1 was added to a solution containing 90 wt parts of polyisobutylene having a weight-average molecular weight of 870,000 and 10 wt parts of polyisobutylene having a weight-average molecular weight of 30,000 in 700 wt parts of toluene, to give an adhesive solution. The solution was applied onto a polyolefin film (polypropylene/polyethylene (weight ratio: 1: 9)) having a thickness of 40 µm and dried thereon at 80°C for 3 minutes, to give a sheet for protecting coatings carrying a pressure-sensitive adhesive layer having a thickness of 10 µm.

### Example 2

A sheet for protecting coatings was obtained in a manner exactly similar to Example 1, except that the blending amount of the cyclohexyl methacrylate oligomer obtained in Preparative Example 1 was changed to 1.0 wt part.

### Example 3

A sheet for protecting coatings was obtained in a manner exactly similar to Example 1, except that the blending amount of the cyclohexyl methacrylate oligomer obtained in Preparative Example 1 was changed to 0.1 wt part.

### Example 4

A sheet for protecting coatings was obtained in a manner exactly similar to Example 1, except that the blending amount of the cyclohexyl methacrylate oligomer obtained in Preparative Example 1 was changed to 0.8 wt part.

### Example 5

A sheet for protecting coatings was obtained in a manner similar to Example 1, by using a mixed solution containing 100 wt parts of a polystyrene block-ethylene-butylene copolymer block-polystyrene block A-B-A-type block polymer (trade name: "Kraton G-1657", manufactured by Shell Chemicals Co., Ltd.), 30 wt parts of a hydrogenated petroleum resin (trade name "Arkon P-100", manufactured by Arakawa Chemical Industries, Ltd.) and 0.5 wt part of the cyclohexyl methacrylate oligomer obtained in Preparative Example 1 dissolved in 500 wt parts of toluene, as the adhesive.

### Example 6

A sheet for protecting coatings was obtained in a manner similar to Example 1, by using a mixed solution containing 100 wt parts of a polystyrene block-ethylene-propylene copolymer block-polystyrene block A-B-A-type block polymer (trade name "Septon 2023", manufactured by Kuraray Co., Ltd.), 20 wt parts of a hydrogenated petroleum resin (trade name "Arkon P-100", manufactured by Arakawa Chemical Industries, Ltd.) and 0.5 wt part of the cyclohexyl methacrylate oligomer obtained in Preparative Example 1 dissolved in 500 wt parts of toluene, as the adhesive.

### Comparative Example 1

A sheet for protecting coatings was obtained in a manner exactly similar to Example 1, except that the cyclohexyl methacrylate oligomer was not blended.

### Comparative Example 2

A sheet for protecting coatings was obtained in a manner exactly similar to Example 1, except that the addition amount of the cyclohexyl methacrylate oligomer obtained in Preparative Example 1 was changed to 5.0 wt parts.

### Comparative Example 3

A sheet for protecting coatings was obtained in a manner exactly similar to Example 3, except that the cyclohexyl methacrylate oligomer obtained in Preparative Example 2 (weight-average molecular weight: 800) was used.

### Comparative Example 4

A sheet for protecting coatings was obtained in a manner exactly similar to Example 3, except that the cyclohexyl methacrylate oligomer obtained in Preparative Example 3 (weight-average molecular weight: 30,000) was used.

### Comparative Example 5

A sheet for protecting coatings was obtained in a manner exactly similar to Example 3, except that the n-butyl acrylate oligomer obtained in Preparative Example 4 (weight-average molecular weight: 4000, Tg: -54°C) was used.

### Comparative Example 6

A sheet for protecting coatings was obtained in a manner exactly similar to Example 3, except that the phenyl methacrylate oligomer obtained in Preparative Example 5 (weight-average molecular weight: 4000, Tg: 110°C) was used.

### [Methods of measuring physical properties and evaluating advantageous effects]

Hereinafter, the methods for measuring physical properties and evaluating advantageous effects used in the present application will be exemplified.

### (1) Adhesiveness

The sheets for protecting coatings obtained in Examples and Comparative Examples were used for evaluation.
The pressure-sensitive adhesive layer-sided surface of a sheet for protecting coatings was placed on the following coated plate (glass transition temperature: 95°C, an epoxy group-containing acrylic-polyacid-based coating having a n-hexadecane contact angle of 20°), and laminated thereto by single reciprocal pressurization with a 2-kg rubber roll (width: 45 mm) under an atmosphere at 23°C and 50% RH, to give a coated plate having the sheet for protecting coatings. After the coated plate having the sheet for protecting coatings was left under the same atmosphere for 30 minutes and 48 hours, the sheet for protecting coatings was subjected to a peel test (180° peel, peeling rate: 300 mm/minute, sample width: 25 mm) according to JIS-Z-0237, for determination of the adhesive strength (adhesive power).
When the adhesive strength after storage for 30 minutes and 48 hours is not less than 3.0 (N/25 mm), the adhesiveness can be regarded as satisfactory, while an adhesive strength of less than 3.0 (N/25 mm), as unsatisfactory. An adhesive strength of less than 3.0 (N/25 mm) may lead to troubles such as exfoliation of the sheet for protecting coatings during automobile transportation.

### [Coated plate]

The coated plate used was prepared by forming, on a steel plate having a thickness of 0.8 mm, an electrodeposition primer layer, an intermediate layer, and additionally an epoxy group-containing acrylic-polyacid-based coating (glass transition temperature: 95°C, n-hexadecane contact angle: 20°) as the top layer in that order.
The contact angle of a coated plate was determined by placing a droplet of n-hexadecane of approximately 2µl on the coated plate under an atmosphere at 23°C and 65% RH and measuring the angle between the coated plate face and the tangent line of the droplet within 1 minute after droplet placement.

### (2) Releasability

A coated plate carrying a sheet for protecting coatings was prepared in a manner exactly similar to (1) above.
The coated plate having a sheet for protecting coatings was stored under an atmosphere at 80°C and 10% RH for 48 hours and additionally at room temperature (23°C, 50% RH) for 3 hours. The coated plate was then subjected to a peel test similar to that in (1) above, to give the peeling power. The sheet for protecting coatings was also separated by hand, for evaluation of the manual release efficiency.
The releasability may be judged good when the peeling power is 10.0 (N/25 mm) or less and bad when it is more than 10.0 (N/25 mm).

### (3) Staining (adhesive residue)

The coating layer surface of the coated plate after the peel tests (1) and (2) was evaluated visually for the presence of staining (adhesive residue).

Evaluation results of the samples in Examples and Comparative Examples are summarized in Table 1.

**Table 1**

| | | Ex 1 | Ex 2 | Ex 3 | Ex 4 | Ex 5 | Ex 6 | Comp arative Ex1 | Comp arative Ex2 | Comp arative Ex3 | Comp arative Ex4 | Comp arative Ex5 | Comp arative Ex6 |
|---|---|---|---|---|---|---|---|---|---|---|---|---|---|
| Glass transition temperature of (meth)acrylic oligomer (°C) | | 56 | 56 | 56 | 56 | 56 | 56 | - | 56 | 56 | 56 | 54 | 110 |
| Weight-average molecular weight of (meth)acrylic oligomer | | 4000 | 4000 | 4000 | 4000 | 4000 | 4000 | - | 4000 | 800 | 30000 | 4000 | 4000 |
| Blending amount of (meth)acrylic oligomer (wt part) | | 0.02 | 1.0 | 0.1 | 0.8 | 0.5 | 0.5 | 0 | 5.0 | 0.1 | 0.1 | 0.1 | 0.1 |
| Adhesiveness | Adhesive strength (after 30 minutes) (N/25mm) | 3.1 | 7.5 | 4.6 | 6.9 | 7.1 | 41 | 0.2 | 8.5 | 0.1 | 0.3 | 0.1 | 0.2 |
| | Adhesive strength (after 48 hours) (N/25mm) | 4.5 | 9.0 | 6.6 | 8.3 | 8.6 | 5.4 | 0.9 | 9.4 | 0.3 | 1.1 | 0.7 | 0.8 |
| Releasability | Peeling power (N/25mm) | 6.5 | 9.5 | 7.2 | 8.6 | 8.9 | 6.8 | 1.4 | 121 | 0.8 | 2.0 | 1.1 | 1.0 |
| | Release efficiency | Good | Good | Good | Good | Good | Good | Light | Heavy | Light | Light | Light | Light |
| Staining (adhesive residue) | | No | No | No | No | No | No | No | Yes | No | No | No | No |

Table 1 shows that the sheets for protecting coatings (of Examples) satisfying the requirements specified in the present invention have an adhesive strength sufficient for preservation of the adhesion state for example during transportation and are easily releasable without deposition of adhesive residue even after being bonded at high temperature for an extended period of time. On the other hand, the sheets for protecting coatings (of Comparative Examples) not satisfying the requirements specified in the present invention are not preferable both in adhesiveness and releasability at the same time.

### Industrial applicability

The sheet for protecting coatings according to the present invention, which is preferably adhesive to less-adhesive coatings often causing adhesion fault and shows good releasability even after being bonded for an extended period of time, can be used preferably as a sheet for protecting coatings for surface protection of automobile bodies and the parts thereof, coated steel plates, and others.

## Claims

1. A sheet for protecting coatings, comprising an adhesion sheet comprising a supporting substrate and a pressure-sensitive adhesive layer formed at least on one side thereof, containing a rubber-based polymer and an aliphatic (meth)acrylic oligomer having a glass transition temperature of 30 to 100°C and a weight-average molecular weight of 1000 to 20,000, wherein the blending amount of the (meth)acrylic oligomer is 0.02 to 1 wt part with respect to 100 wt parts of the rubber-based polymer.

2. The sheet for protecting coatings according to Claim 1, wherein the rubber-based polymer is polyisobutylene or a styrene-based A-B-A-type block polymer.

3. The sheet for protecting coatings according to Claim 1 or 2, wherein the (meth)acrylic oligomer is a cycloalkyl (meth)acrylate oligomer.

4. The sheet for protecting coatings according to Claim 3, wherein the cycloalkyl(meth)acrylate oligomer is a cyclohexyl methacrylate oligomer.

5. The sheet for protecting coatings according to any one of Claims 1 to 4, for protection of automobile coatings.

## Patentansprüche

1. Folie zum Schützen von Beschichtungen, umfassend eine Haftfolie umfassend ein Trägersubstrat und eine wenigstens auf einer Seite davon gebildete Haftklebeschicht, enthaltend ein Polymer auf Kautschukbasis und ein aliphatisches (Meth)acryloligomer mit einer Glasübergangstemperatur von 30 bis 100 °C und einem gewichtsmittleren Molekulargewicht von 1000 bis 20000, wobei die Menge des (Meth)acryloligomers in der Mischung 0,02 bis 1 Gewichtsteile bezogen auf 100 Gewichtsteile des Polymers auf Kautschukbasis beträgt.

2. Folie zum Schützen von Beschichtungen nach Anspruch 1, wobei das Polymer auf Kautschukbasis Polyisobutylen oder ein Blockpolymer vom A-B-A-Typ auf Styrolbasis ist.

3. Folie zum Schützen von Beschichtungen nach Anspruch 1 oder 2, wobei das (Meth)acryloligomer ein Cycloalkyl(meth)acrylatoligomer ist.

4. Folie zum Schützen von Beschichtungen nach Anspruch 3, wobei das Cycloalkyl(meth)acrylatoligomer ein Cyclohexylmethacrylatoligomer ist.

5. Folie zum Schützen von Beschichtungen nach einem der Ansprüche 1 bis 4, zum Schutz von Automobilbeschichtungen.

## Revendications

1. Feuille pour protéger des revêtements, comprenant une feuille d'adhérence comprenant un substrat de support et une couche adhésive autocollante formée au moins sur un côté de celui-ci, contenant un polymère à base de caoutchouc et un oligomère (méth)acrylique aliphatique ayant une température de transition vitreuse de 30 à 100 °C et une masse moléculaire moyenne en poids de 1 000 à 20 000, dans laquelle la quantité de mélange de l'oligomère (méth)acrylique est de 0,02 à 1 partie en poids pour 100 parties en poids du polymère à base de caoutchouc.

2. Feuille pour protéger des revêtements selon la revendication 1, dans laquelle le polymère à base de caoutchouc est un poly(isobutylène) ou un polymère séquencé de type A-B-A à base de styrène.

3. Feuille pour protéger des revêtements selon la revendication 1 ou 2, dans laquelle l'oligomère (méth)acrylique est un oligomère de (méth)acrylate de cycloalkyle.

4. Feuille pour protéger des revêtements selon la revendication 3, dans laquelle l'oligomère de (méth)acrylate de cycloalkyle est un oligomère de méthacrylate de cyclohexyle.

5. Feuille pour protéger des revêtements selon l'une quelconque des revendications 1 à 4, pour la protection des revêtements d'automobiles.
